# EUROPEAN PATENT APPLICATION

(11) **EP 4 116 031 A1**
(43) Date of publication of application: **11.01.2023**
(21) Application number: 21184157.2
(22) Date of filing: 07.07.2021
(51) Int. Cl.: B23Q 1/01, B23Q 39/02, B25J 5/04, B25J 9/02, F03D 80/50

(54) **GANTRY SYSTEM FOR MANUFACTURING A WIND TURBINE BLADE AND METHOD FOR MANUFACTURING A WIND TURBINE BLADE**

(71) Applicant: Siemens Gamesa Renewable Energy A/S, 7330 Brande (DK)
(72) Inventor: The designation of the inventor has not yet been filed
(74) Representative: SGRE-Association

(57) **Abstract**

A gantry system (8) for manufacturing a wind turbine blade (3), the gantry system comprising
a frame (10) for bridging the wind turbine blade (3') in a cross-section direction of the blade (3') during manufacture,
wheels (12) rotatably attached to the frame (10) for locomotion of the gantry system, and
one or more robotic units (9) attached to the frame (10) for performing manufacturing steps for manufacturing the blade (3').
Having the gantry system bridging the wind turbine blade in a cross-section direction of the blade during manufacture provides a stable vehicle with a large footprint for manufacturing a wind turbine blade.

## Description

The present invention relates to a gantry system for manufacturing a wind turbine blade and a method for manufacturing a wind turbine blade.

Producing more power using a wind turbine under given wind conditions can be achieved by increasing the size of the blades. However, the manufacture of wind turbine blades is becoming increasingly difficult for increasing blade sizes.

Manufacturing a wind turbine blade usually includes several manufacturing steps carried out in a horizontal orientation of the blade, for example in a manufacturing hall. These manufacturing steps include, for example, producing a blade shell (e.g., from fiber-reinforced laminate) and processing the outer surface of the blade shell (e.g., by cleaning, polishing, coating, painting). However, current blade diameters at the root end of a blade can be as large as 4.5 meters. It is expected that this number keeps increasing in the next years reaching blade diameters at the root end of 6 meters or more.

Manufacturing such large blades requires performing work over the entire cross-section of the blade and along the entire length of the blade in the horizontal direction. Hence, it is necessary to perform work with high accuracy in large heights and over a very large length. Further, workers may be exposed during the work to hazardous substances such as paint. They may also be required to wear protection suits and masks over a long period of time or work in non-ergonomic positions.

It is one object of the present invention to provide an improved tool for manufacturing a wind turbine blade and an improved method for manufacturing the wind turbine blade.

Accordingly, a gantry system for manufacturing a wind turbine blade is provided. The gantry system comprises
a frame for bridging the wind turbine blade in a cross-section direction of the blade during manufacture,
wheels rotatably attached to the frame for locomotion of the gantry system, and
one or more robotic units attached to the frame for performing manufacturing steps for manufacturing the blade.

As blade diameters of wind turbines keep increasing, frameworks and vehicles for manufacturing wind turbine blades in the horizontal orientation of the blade are required to have a large height. For a large height of a vehicle also a large footprint of the vehicle is required for stability reasons.

Having the gantry system bridging the wind turbine blade in a cross-section direction of the blade during manufacture provides a stable vehicle with a large footprint for manufacturing a blade. This is the case even for large blade diameters which require large vehicle heights. Further, the large footprint can be provided by the gantry system even in the case that a space on one or both sides of the wind turbine blade in the horizontal orientation during manufacture is limited. For example, the proposed gantry system can be used even in a manufacturing hall being small relative to the blade size.

Having the gantry system on wheels allows a locomotion of the gantry system by driving on its wheels. In particular, the gantry system is performing a rolling movement on the wheels. Having the gantry system on wheels allows a high flexibility in manoeuvring the gantry system alongside the blade. This is in particular advantageous as the blade is usually curved and tapered from a root portion to a tip portion thereof.

Having the one or more robotic units allows an automatization of manufacturing steps and, thus, an easier, faster, safer and more efficient manufacturing of the blade.

The wind turbine blade is provided to become part of a rotor of a wind turbine. The wind turbine is an apparatus to convert the wind's kinetic energy into electrical energy. The wind turbine comprises, for example, the rotor having one or more of the blades connected each to a hub, a nacelle including a generator, and a tower holding, at its top end, the nacelle. The tower of the wind turbine may be connected to a foundation of the wind turbine such as a monopile in the seabed.

In the installed state of the wind turbine, the blade, e.g., a root portion of the blade, is, for example fixedly or rotatably connected to the hub. The wind turbine blade is, for example, directly bolted to the hub, or is connected via a pitch bearing to the hub. The pitch bearing is configured to adjust the angle of attack of the blade according to the wind speed to control the rotational speed of the blade.

Apart from the essentially cylindrical root portion configured for connection with the hub, the outer surface of the wind turbine blade has an aerodynamically shaped cross-section (airfoil). The aerodynamically shaped cross-section of the wind turbine blade comprises, for example, a pressure side (upwind side) and a suction side (downwind side). The pressure side and the suction side are connected with each other at a leading edge and a trailing edge.

A blade shell of the blade is, for example, manufactured from fiber-reinforced resin. The blade shell is, for example, manufactured by vacuum-infusion of resin into a dry fiber lay-up and curing the resin. However, the blade shell may also be manufactured by a different method. The blade shell has, in particular, an outer surface and an inner surface, wherein the outer surface defines the aerodynamic profile of the blade, and the inner surface defines an inner cavity of the blade.

The "blade during manufacture" which is treated and/or processed by the one or more robotic units may be any state of the blade or portions thereof during the whole blade manufacturing process. This may include a state in which the blade shell is already closed, i.e. forming, in a cross-section view, a closed inner cavity and/or having a continuous outer surface. However, the "blade during manufacture" may also include a state in which the blade shell is not yet closed but, for example, only a half shell or another section of the blade is bridged by the frame of the gantry system and treated and/or processed by the one or more robotic units. The "blade during manufacture" is, in particular, a blade or portion thereof in a horizontal orientation of the blade.

The one or more robotic units are, for example, industrial robots. The one or more robotic units each comprise, for example, a tool attachment portion (e.g., a tool flange) for attaching various tools and/or end effectors. In particular, the tools and/or end effectors are configured for performing manufacturing steps during manufacture of the wind turbine blade. The one or more robotic units may also comprise one or more supply lines and/or exhaust/discharge/suction lines for supplying or exhausting/discharging material, fluid, gas, liquid etc.

The tool attachment portion defines, for example, a tool center point of the respective robotic unit. The respective robotic unit is, for example, capable to move the tool center point (and, thus, the tool and/or end effector) in a translation direction and/or rotational direction.

The manufacturing steps performed by the one or more robotic units may include manufacturing steps related to the fabrication of the blade shell (e.g., the lamination process). Examples include arranging a fiber lay-up, a core material such as balsa, wood or foam, a web (e.g., shear web) in a mold etc.

The manufacturing steps performed by the one or more robotic units may include manufacturing steps related to treatment of the outer surface of the blade shell. Examples include painting, sanding, polishing, cleaning, providing filling material for filling pinholes, a quality check of the outer surface etc.

The manufacturing steps performed by the one or more robotic units may also include manufacturing steps related to other kind of processing at the outer surface of the blade shell. Examples include installing a leading-edge protection system, vortex generators or aerodynamic blade add-ons such as trailing edge serration panels (e.g., Dinotails), spoilers, flaps or slats.

The tools and/or end effectors attachable to the one or more robotic units comprise, for example, a surface treatment tool, a polishing tool, a cleaning tool, a gripper (e.g., vacuum gripper, pneumatic gripper, hydraulic gripper, electric gripper), a claw, a robotic hand, suction means, dispensing means, a nozzle, a spray nozzle, a camera or other sensor for inspection means and/or an emitter of electromagnetic radiation (e.g., IR light, UV light, visual light and/or laser light).

The frame of the gantry system is, in particular, a framework, steel framework and/or steel construction. The frame comprises, for example, several beams/structures, in particular steel beams/steel structures.

In embodiments, the gantry system comprises two or more robotic units attached to the frame so as to perform manufacturing steps at both sides of the blade during manufacture, as seen in the cross-section view of the blade.

Thus, both sides of the blade can be treated and/or processed by means of the two or more robotic units simultaneously. Hence, time and cost can be saved.

In embodiments, a height of the gantry system is 6 meters or lager, 8 meters or larger, 10 meters or larger and/or 12 meters or larger.

According to an embodiment, the one or more robotic units each comprise a robotic arm, in particular a robotic arm configured to move a tool center point of the robotic arm in six degrees of freedom.

Thus, the one or more robotic units can perform various and complex manufacturing tasks. Further, they can better reach around the blade in its cross-section direction. Furthermore, the one or more robotic units can perform various and complex manufacturing tasks even in view of the varying outer profile of the blade from its root portion to its tip.

According to a further embodiment, the wheels are arranged in two-lanes and/or the gantry system is configured such that during manufacture of the blade at least one wheel of the gantry system is arranged on each side of the blade in the cross-section direction of the blade.

Thus, the gantry system has a large footprint and, hence, a great stability.

According to a further embodiment, one or more of the wheels are steerable wheels and/or are rotatably attached to the frame such that the respective wheel is rotatable around an axis arranged parallel to a height direction of the gantry system.

Thus, the gantry system can be positioned with respect to the blade with greater flexibility.

According to a further embodiment, one or more of the wheels are rotatably attached to the frame such that the respective wheel is rotatable by an angle of at least 180° around the axis arranged parallel to the height direction of the gantry system.

Thus, the gantry system can move in all directions on a plane such as a floor of a manufacturing hall. Hence, it can be positioned even more flexible with respect to the blade.

In particular, the plane on which the gantry system moves is perpendicular to a height direction of the gantry system.

According to a further embodiment, the frame comprises
two base members each having two or more of the wheels,
two side pillars each connected to a respective one of the two base members, and
a horizontal beam connecting the two side pillars,
wherein the gantry system is configured such that the two side pillars and the horizontal beam are bridging the blade in the cross-section direction of the blade during manufacture.

Thus, the gantry system comprises several modules such as the two base members, the two side pillars, the horizontal beam and the one or more robotic units. In particular, the individual modules are configured such that they can be easily mounted to each other and dismounted from each other. For example, the individual modules may be connected to each other by bolt connections easily accessible from the outside.

Having this modular structure of the gantry system allows an easy replacement of individual modules to adjust the gantry system to a specific blade size and/or shape. For example, for a larger blade diameter at the root end, the two pillars and the horizontal beam could be replaced by two pillars and a horizontal beam having each a greater length.

According to a further embodiment, at least one of the one or more robotic units is movably attached to the frame for moving the respective robotic unit relative to the frame.

Thus, the one or more robotic units can be positioned with respect to the blade not only by moving the gantry system as a whole (i.e. locomotion of the gantry system based on its wheels) but also by moving the respective robotic unit along the gantry system. Thus, a tool and/or end effector attached to the one or more robotic units can be better (e.g., closer) positioned with respect to the blade.

According to a further embodiment,
at least one of the one or more robotic units is movably attached to the frame by means of a sled, the sled being configured for moving the respective robotic unit in a linear direction relative to the frame, and/or
at least one of the one or more robotic units is movably attached to a respective one of the side pillars by means of a sled, the sled being configured for moving the respective robotic unit in a height direction of the gantry system.

Having a sled and a matching rail allows an easy movement of the one or more robotic units with respect to the frame of the gantry system. The sled is, for example, fixedly attached to the one or more robotic units and the rail is, for example, provided by and/or fixedly attached to the respective side pillar.

In embodiments, at least one of the one or more robotic units may be movably attached to the horizontal beam by means of a sled, the sled being configured for moving the respective robotic unit along the horizontal beam.

According to a further embodiment,
at least one of the one or more robotic units is rotatably attached to the frame by means of a swing arm, and/or
at least one of the one or more robotic units is rotatably attached to a respective one of the side pillars by means of a swing arm, the swing arm being rotatable around an axis arranged parallel to a height direction of the gantry system for moving the respective robotic unit in a plane perpendicular to the height direction of the gantry system.

By having the swing arm, the one or more robotic units can be swiveled in and out with respect to the blade.

According to a further embodiment, the gantry system comprises a control unit for controlling the locomotion of the gantry system, a movement of the one or more robotic units relative to the frame of the gantry system and/or a movement of a tool center point of a respective robotic unit.

The control unit is, in particular, configured for global positioning of the gantry system by controlling the locomotion of the gantry system. The global positioning of the gantry system includes, for example, positioning of the gantry system with respect to the blade and the manufacturing environment (e.g., a manufacturing hall).

Further, the control unit is, in particular, configured for local positioning of the one or more robotic units by controlling the movement of the one or more robotic units relative to the frame of the gantry system.

Further, the control unit is, in particular, configured for local positioning of the tool center point of a respective robotic unit. Thus, the movement, path and/or pose of a tool and/or end effector of a respective robotic unit can be controlled.

Having the control unit, the position of the one or more robotic units and/or the tool center point of a respective robotic unit can be accurately controlled. For example, the one or more robotic units and/or its tool center point can be poisoned with sub-cm accuracy.

Thus, a tool and/or end effector attached to a respective robotic unit can be positioned next to the blade with high spatial accuracy. Thus, the blade can be treated and/or processed with high accuracy.

The respective units described herein, e.g., the control unit, may be implemented in hardware and/or in software. If said unit is implemented in hardware, it may be embodied as a device, e.g., as a computer or as a processor or as a part of a system such as a computer system. If said unit is implemented in software it may be embodied as a computer program product, as a function, as a routine, as a program code or as an executable object.

According to a further embodiment, the control unit is configured for simultaneously controlling the locomotion of the gantry system, the movement of the one or more robotic units relative to the frame and the movement of the tool center point of the respective robotic unit.

According to a further embodiment, the gantry system comprises a sensor system including one or more sensors for obtaining sensor data of the blade during manufacture and/or of the one or more robotic units, wherein
the control unit is configured for controlling the locomotion of the gantry system, the movement of the one or more robotic units relative to the frame and/or the movement of the tool center point of the respective robotic unit based on the sensor data, and/or
the control unit is configured for controlling a manufacturing step of the blade based on the sensor data.

Having the sensor system and transferring sensor data from the sensor system to the control unit, the control unit may receive a feedback, for example on the current position of the gantry system, the current position of the respective robotic unit and/or the current position of the tool center point of the respective robotic unit. Said current positions may be positions with respect to the blade.

Further, having the sensor system, the control unit may receive a feedback on the manufacturing process.

The one or more sensors may include laser trackers, odometry systems including motion sensors, wheel speed sensors (e.g., counting the number of wheel rotations), wheel angle sensors, radar systems (radio detection and ranging), lidar systems (light detection and ranging), optical sensors such as infrared or visual light cameras (e.g., scanning markers on a floor and/or ceiling of a manufacturing hall and/or on a blade), structured light sensors, ultrasonic sensors, encoders, laser pointer, proximity sensors, temperature sensors and/or pressure sensors.

According to a further embodiment, the control unit is configured for controlling the locomotion of the gantry system, the movement of the one or more robotic units relative to the frame, the movement of the tool center point of the respective robotic unit and/or the manufacturing step based on a predetermined digital model of the wind turbine blade and/or based on a deviation of the predetermined digital model of the wind turbine blade from an actual shape of the blade during manufacture obtained by means of the sensor data.

Determining a position of the gantry system, the respective robotic unit and/or the tool center point of the respective robotic unit with respect to the blade is hampered by the fact that the outer shape of a wind turbine blade has usually a complex form, in particular a non-regular geometric form. The outer shape of a wind turbine blade is, in particular, defined by a cross-section varying from a cylindrical root portion to an aerodynamic profile which in turn is varying towards the tip end. Further, the blade is usually bent from the root end to the tip end.

Having the predetermined digital model of the blade allows a better control of a position of the gantry system, the respective robotic unit and/or the tool center point of the respective robotic unit with respect to the blade.

The predetermined digital model of the blade is, in particular, a CAD model of the blade. The predetermined digital model is, in particular, a 3D model of the blade.

In embodiments, the control unit is configured to determine a deviation of the predetermined digital model of the blade from an actual shape of the blade obtained by means of the sensor data. For example, the control unit is configured to determine a digital model of the actual shape of the blade by means of the sensor data.

In particular, by using the relationship between the CAD model and the sensor data, it is possible to better define and perform a manufacturing process at a given point (e.g., an exact location) on the blade. In particular, the manufacturing process at the given point can be performed with a very high accuracy and repeatability.

Furthermore, sensor data obtained from said exact location and obtained during or after performing the manufacturing process, can be fed back and saved as process data for documentation purposes and/or preparation of further manufacturing processes.

According to a further aspect, a method for manufacturing a wind turbine blade is proposed. The method comprises the steps of
moving a gantry system on wheels with respect to a wind turbine blade during manufacture such that a frame of the gantry system bridges the blade in a cross-section direction of the blade,
moving a tool center point of one or more robotic units attached to the frame of the gantry system with respect to the blade, and
performing a manufacturing step for manufacturing the blade by means of the one or more robotic units.

According to a further aspect, a computer program product is proposed. The computer program product comprises a program code for executing the above-described method when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

The embodiments and features described with reference to the gantry system of the present invention apply mutatis mutandis to the method of the present invention.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a wind turbine according to an embodiment;
Fig. 2 shows a perspective view of a gantry system for manufacturing a wind turbine blade of the wind turbine of Fig. 1;
Fig. 3 shows a wheel of the gantry system of Fig. 3 in a top view;
Fig. 4 shows the gantry system of Fig. 3 in a front view together with a blade during manufacture;
Fig. 5 shows individual modules of the gantry system of Fig. 3, the individual modules being in an unassembled state;
Fig. 6 shows the gantry system of Fig. 3 together with a blade during painting of the blade; and
Fig. 7 shows a flowchart illustrating a method for manufacturing a blade of the wind turbine of Fig. 1 according to an embodiment.

In the Figures, like reference numerals designate like or functionally equivalent elements, unless otherwise indicated.

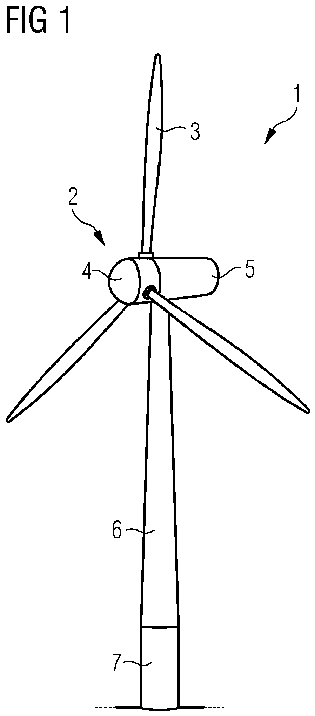

Fig. 1 shows a wind turbine 1 according to an embodiment. The wind turbine 1 comprises a rotor 2 having one or more blades 3 connected to a hub 4. The hub 4 is connected to a generator (not shown) arranged inside a nacelle 5. During operation of the wind turbine 1, the blades 3 are driven by wind to rotate and the wind's kinetic energy is converted into electrical energy by the generator in the nacelle 5. The nacelle 5 is arranged at the upper end of a tower 6 of the wind turbine 1. The tower 6 is erected on a foundation 7 such as a concrete foundation or a monopile driven into the ground or seabed.

In the following a gantry system 8 with robotic units 9 for manufacturing a wind turbine blade 3 of the wind turbine 1 of Fig. 1 is described.

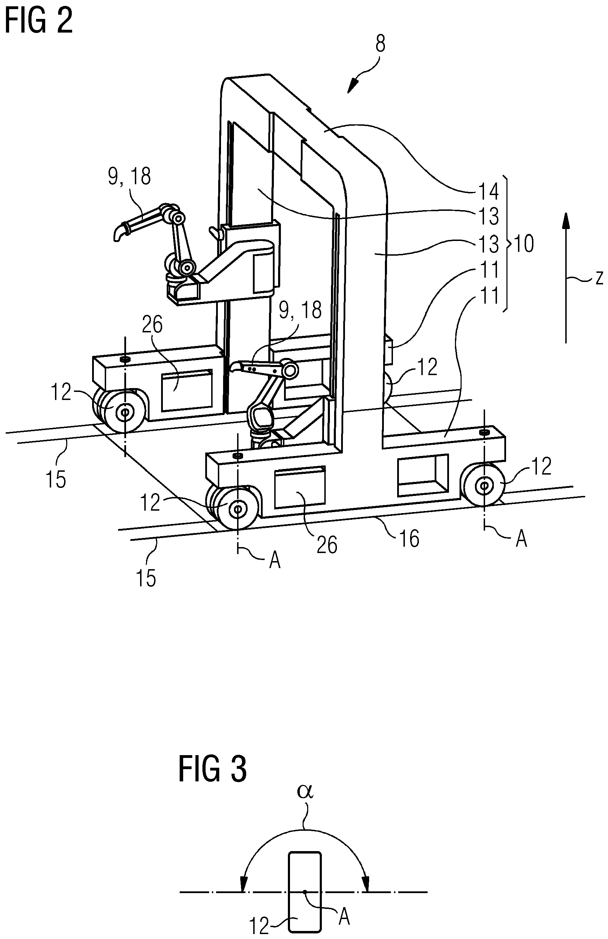

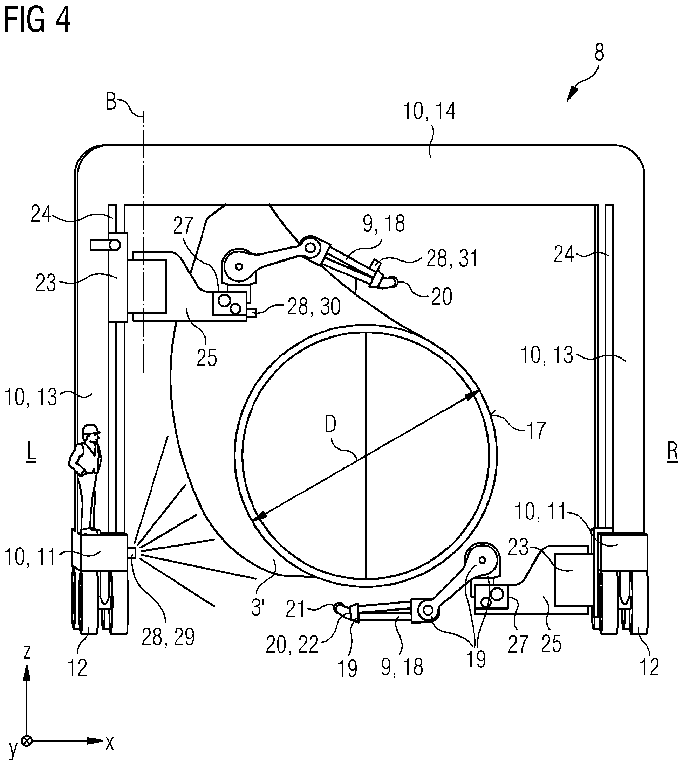

Fig. 2 shows a perspective view of the gantry system 8 according to an embodiment. The gantry system 8 comprises a frame 10. The frame 10 is, in particular, a steel structure. The frame 10 comprises two base members 11 each having two or more wheels 12. In the shown example, there are four wheels 12 rotatably attached to each base member 11 for locomotion of the gantry system 8. The frame 10 further includes two side pillars 13. Each side pillar 13 is connected to a respective one of the base members 11. The frame 10 includes in addition a horizontal beam 14 connecting the two side pillars 13. In particular, the two side pillars 13 and the horizontal beam 14 are configured for bridging the wind turbine blade 3' in the cross-section direction of the blade 3' during manufacture, as can be seen in Fig. 4.

The wheels 12 of the gantry system 8 are arranged in two-lanes 15 (Fig. 2). As can be seen in Fig. 4, during treatment of the blade 3' a first one of the base members 11 with a first set of wheels 12 is arranged on one side L (left side in Fig. 4) of the blade 3', and a second one of the base members 11 with a second set of wheels 12 is arranged on the other side R (right side in Fig. 4) of the blade 3'. Further, both base members 11 are extended in a direction Y perpendicular to the height direction Z of the gantry system and perpendicular to an extension direction X of the horizontal beam 14. Thus, the gantry system 8 has a large footprint 16 (Fig. 2) while requiring only little space on the sides L, R of the blade 3' (Fig. 4).

The wheels 12 are, in particular, steerable wheels. In particular, each wheel 12 is rotatably attached to the respective base member 11 such that it can rotate around an axis A arranged parallel to a height direction Z of the gantry system 8. In Fig. 2, two axes A are shown exemplarily and denoted with a reference sign. For example, each wheel 12 can rotate by an angle α of at least 180° around the axis A. Fig. 3 shows a top view onto one of the wheels 12 of Fig. 2 illustrating the angle α by which the wheel 12 is rotatable.

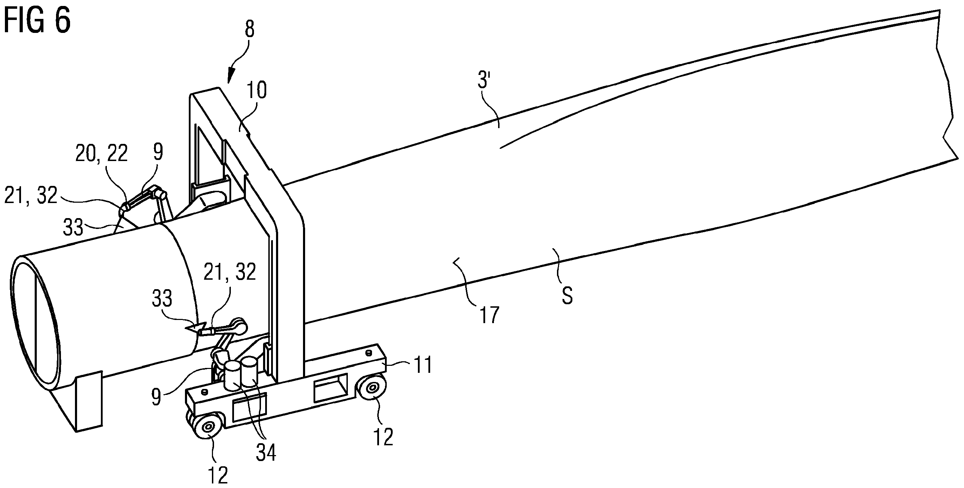

There are one or more robotic units 9 attached to the frame 10 of the gantry system 8. In the shown example, there are two robotic units 9 each attached to a respective side pillar 13 of the frame 10. The robotic units 9 are configured for performing manufacturing steps during manufacture of the blade 3' such as painting an outer surface 17 (Fig. 6) of the blade 3'.

Each robotic unit 9 comprises a robotic arm 18. Each robotic arm 18 comprises several joints 19 (Fig. 4). Further, each robotic arm 18 comprises a tool attachment portion 20 for attaching various tools and/or end effectors 21. Each robotic arm 18 comprises a tool center point 22. The tool center point 22 is, for example, defined by the tool attachment portion 20. The tool center point 22 may also be defined by a point on the tool and/or end effector 21. It may, for example, be a tip of the tool and/or end effector 21.

Each robotic arm 18 is, for example, capable to move the tool center point 22, and hence the tool/end effector 21, in six degrees of freedom (three translational and three rotational degrees of freedom).

Furthermore, the robotic units 9 are movably attached to the frame 10 for moving the respective robotic unit 9 relative to the frame 10. In the shown example, each robotic unit 9 is movably attached to a respective one of the side pillars 13 by means of a sled 23 (Fig. 4) running in grooves 24 formed in the side pillars 13. Due to the sleds 23, each robotic unit 9 can be moved relative to the side pillar 13 in the height direction Z of the gantry system 8.

In addition, each robotic unit 9 is rotatably attached to the frame 10 - in the shown example to the respective sled 23 attached to the respective side pillar 13 - by means of a swing arm 25 (Fig. 4). Each swing arm 25 is rotatable around an axis B arranged parallel to the height direction Z of the gantry system 8. Having the swing arms 25 allows movement of the respective robotic unit 9 in a plane (XY-plane in Fig. 4) perpendicular to the height direction Z.

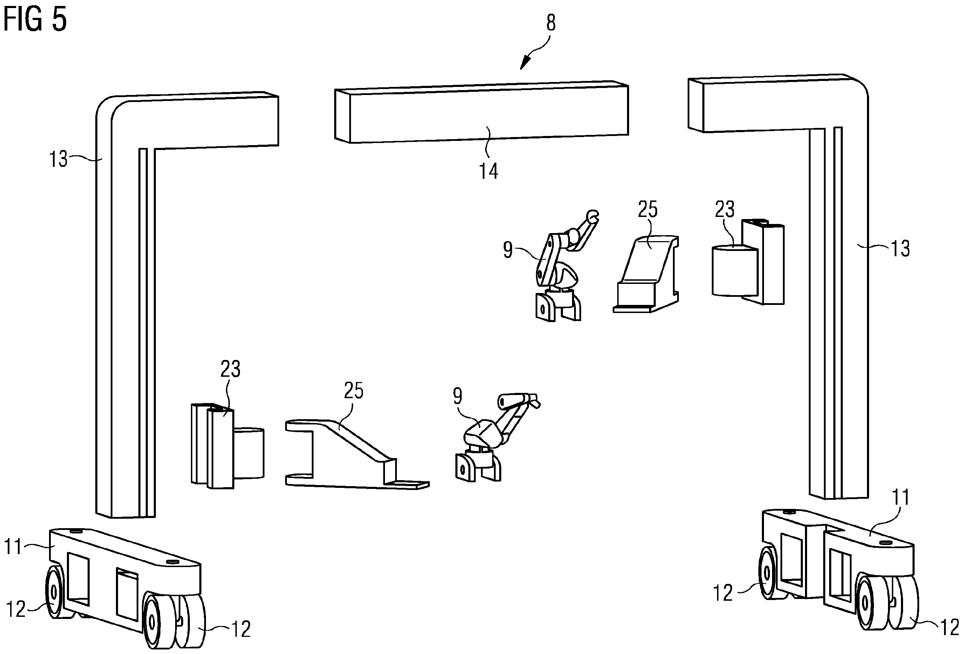

As illustrated in Fig. 5, the gantry system 8 may have a modular structure wherein, for example, the two base members 11, the two side pillars 13, the horizontal beam 14, the robotic units 9, the sleds 23 and the swing arms 24 are individual modules. This allows an easy replacement of individual modules to adjust the gantry system 8 to a specific blade size and/or shape. For example, for a larger blade diameter D (Fig. 4) at the root end of the blade 3', the two pillars 13 and the horizontal beam 14 could be replaced by two pillars and a horizontal beam (not shown) having each a greater length.

In particular, the individual modules 9, 11, 13, 14, 23, 24 may be configured such that they can be easily mounted to each other and dismounted from each other. For example, the individual modules 9, 11, 13, 14, 23, 24 may be connected to each other by bolt connections (not shown) easily accessible from the outside.

Furthermore, the gantry system 8 comprises a control unit 26 (Fig. 2). The control unit 26 is, for example, arranged at the one or both base members 11 (Fig. 2). However, the control unit 26 may also be arranged at a different location on the frame 10 of gantry system 8 or may be arranged remote from the frame 10. The control unit 26 is configured for controlling the locomotion of the gantry system 8 on its wheels 12, and, thus, the position of the gantry system 8 with respect to a manufacturing hall (not shown) and/or the blade 3'. Further, the control unit 26 is configured for controlling a movement of the robotic units 9 relative to the frame 10 by means of the sleds 23 and swing arms 25 and, thus, the position of the respective robotic unit 9 with respect to the frame 10. Further, the control unit 26 is configured for controlling a movement of the tool center point 22 (Fig. 4) of a respective robotic unit 9 (e.g., a pose of the respective robotic arm 18), and, thus, the position of the respective tool center point 22 with respect to a base portion 27 (Fig. 4) of the respective robotic unit 9.

Furthermore, the gantry system comprises a sensor system 28 including one or more sensors 29, 30, 31 for obtaining sensor data of the blade 3' and/or of the robotic units 9. In Fig. 4, there are exemplarily shown a sensor 29 attached to the frame 10 (in particular to the base member 11) of the gantry system 8, a sensor 30 attached to the base portion 27 of the robotic unit 9, and a sensor 31 attached close to the tool attachment portion 20 of the robotic unit 9.

However, the sensors 29, 30, 31 might also be arranged at different locations of the gantry system 8 and/or there might be more or different sensors than the one shown. The sensors 29, 30, 31 may include laser trackers, odometry systems including motion sensors, wheel speed sensors (e.g., counting the number of wheel rotations), wheel angle sensors, radar systems (radio detection and ranging), lidar systems (light detection and ranging), optical sensors such as infrared or visual light cameras (e.g., scanning markers on a floor and/or ceiling of a manufacturing hall and/or on a blade), ultrasonic sensors, encoders, laser pointer, proximity sensors, temperature sensors and/or pressure sensors.

The control unit 26 is configured for controlling the locomotion of the gantry system 8, the movement (sleds 23, swing arms 25) of the robotic units 9 relative to the frame 10 and the movement of the tool center point 22 based on the sensor data from the sensor system 28.

Further, the control unit 26 is configured for controlling a manufacturing step of the wind turbine blade 3' based on the sensor data.

In particular, the control unit 26 is configured for controlling the locomotion of the gantry system, the movement of the robotic units 9 relative to the frame 10, the movement of the tool center point 22 of the respective robotic unit 9 and/or the manufacturing step based on a predetermined digital model of the wind turbine blade 3. The predetermined digital model is, for example, a 3D CAD model (computer aided design) of the blade 3.

The control unit 26 may, for example, be configured for determining a deviation of the predetermined digital model of the blade 3 from an actual shape S of the blade 3' during manufacture obtained by means of the sensor data.

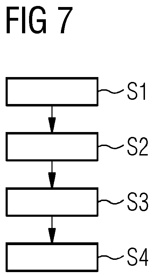

In the following a method for manufacturing the wind turbine blade 3 is described with respect to Figs. 6 and 7.

In a fist step S1 of the method, the gantry system 8 is moved on its wheels 12 with respect to the wind turbine blade 3' during manufacture. The frame 10 of the gantry system 8 bridges the blade 3' in the cross-section direction of the blade 3', so as to provide a large footprint 16 (Fig. 2) and good stability of the gantry system 8. The movement of the gantry system 8 on its wheels 12 is controlled by the control unit 26.

In a second step S2 of the method, the robotic units 9 are moved relative to the frame 10 by means of the sleds 23 and swing arms 25 (Fig. 4). The movement of the robotic units 9 relative to the frame 10 is controlled by the control unit 26.

In a third step S3 of the method, the tool center point 22 of each robotic unit 9 is moved with respect to the blade 3'. The movement of the tool center point 22 is controlled by the control unit 26.

In a fourth step S4 of the method, a manufacturing step for manufacturing the blade 3' is performed by means of the robotic units 9. In the shown example of Fig. 6 this manufacturing step includes painting the outer surface 17 of the blade 3'. For this purpose, the end effector 21 of each robotic unit 9 comprises a spray nozzle 32 for spraying paint 33 onto the outer surface 17 of the blade 3'. Further shown in Fig. 6 are tanks 34 containing paint and arranged on the base member 11.

Steps S1 to S4 may be carried out simultaneously and repeatedly until the entire outer surface 17 of the blade 3' is coated with paint 33. Having the gantry system 8 with the robotic units 9 allows to paint the outer surface 17 of a blade 3 in an automated manner.

Although the present invention has been described in accordance with preferred embodiments, it is obvious for the person skilled in the art that modifications are possible in all embodiments.

## Claims

1. A gantry system (8) for manufacturing a wind turbine blade (3), the gantry system comprising
a frame (10) for bridging the wind turbine blade (3') in a cross-section direction of the blade (3') during manufacture,
wheels (12) rotatably attached to the frame (10) for locomotion of the gantry system, and
one or more robotic units (9) attached to the frame (10) for performing manufacturing steps for manufacturing the blade (3').

2. The gantry system according to claim 1, wherein the one or more robotic units (9) each comprise a robotic arm (18), in particular a robotic arm (18) configured to move a tool center point (22) of the robotic arm (18) in six degrees of freedom.

3. The gantry system according to claim 1 or 2, wherein the wheels (12) are arranged in two-lanes (15) and/or the gantry system is configured such that during manufacture of the blade (3') at least one wheel (12) of the gantry system is arranged on each side (L, R) of the blade (3') in the cross-section direction of the blade (3').

4. The gantry system according to one of claims 1 to 3, wherein one or more of the wheels (12) are steerable wheels (12) and/or are rotatably attached to the frame (10) such that the respective wheel (12) is rotatable around an axis (A) arranged parallel to a height direction (Z) of the gantry system.

5. The gantry system according to claim 4, wherein one or more of the wheels (12) are rotatably attached to the frame (10) such that the respective wheel (12) is rotatable by an angle (α) of at least 180° around the axis (A) arranged parallel to the height direction (Z) of the gantry system.

6. The gantry system according to one of claims 1 to 5, wherein the frame (10) comprises
two base members (11) each having two or more of the wheels (12),
two side pillars (13) each connected to a respective one of the two base members (11), and
a horizontal beam (14) connecting the two side pillars (13),
wherein the gantry system is configured such that the two side pillars (13) and the horizontal beam (14) are bridging the blade (3') in the cross-section direction of the blade (3') during manufacture.

7. The gantry system according to one of claims 1 to 6, wherein at least one of the one or more robotic units (9) is movably attached to the frame (10) for moving the respective robotic unit (9) relative to the frame (10).

8. The gantry system according to claim 7, wherein
at least one of the one or more robotic units (9) is movably attached to the frame (10) by means of a sled (23), the sled (23) being configured for moving the respective robotic unit (9) in a linear direction (Z) relative to the frame (10), and/or
at least one of the one or more robotic units (9) is movably attached to a respective one of the side pillars (13) by means of a sled (23), the sled (23) being configured for moving the respective robotic unit (9) in a height direction (Z) of the gantry system.

9. The gantry system according to claim 7 or 8, wherein
at least one of the one or more robotic units (9) is rotatably attached to the frame (10) by means of a swing arm (25), and/or
at least one of the one or more robotic units (9) is rotatably attached to a respective one of the side pillars (13) by means of a swing arm (25), the swing arm (25) being rotatable around an axis (B) arranged parallel to a height direction (Z) of the gantry system for moving the respective robotic unit (9) in a plane (XY) perpendicular to the height direction (Z) of the gantry system.

10. The gantry system according to one of claims 1 to 9, comprising a control unit (26) for controlling the locomotion of the gantry system, a movement of the one or more robotic units (9) relative to the frame (10) of the gantry system and/or a movement of a tool center point (22) of a respective robotic unit (9).

11. The gantry system according to claim 10, wherein the control unit (26) is configured for simultaneously controlling the locomotion of the gantry system, the movement of the one or more robotic units (9) relative to the frame (10) and the movement of the tool center point (22) of the respective robotic unit (9).

12. The gantry system according to claim 10 or 11, comprising a sensor system (28) including one or more sensors (29, 30, 31) for obtaining sensor data of the blade (3') during manufacture and/or of the one or more robotic units (9), wherein
the control unit (26) is configured for controlling the locomotion of the gantry system, the movement of the one or more robotic units (9) relative to the frame (10) and/or the movement of the tool center point (22) of the respective robotic unit (9) based on the sensor data, and/or
the control unit (26) is configured for controlling a manufacturing step of the blade (3') based on the sensor data.

13. The gantry system according to one of claims 10 to 12, wherein the control unit (26) is configured for controlling the locomotion of the gantry system, the movement of the one or more robotic units (9) relative to the frame (10), the movement of the tool center point (22) of the respective robotic unit (9) and/or the manufacturing step based on a predetermined digital model of the wind turbine blade (3) and/or based on a deviation of the predetermined digital model of the wind turbine blade (3) from an actual shape (S) of the blade (3') during manufacture obtained by means of the sensor data.

14. A method for manufacturing a wind turbine blade (3) comprising the steps of
moving (S1) a gantry system (8) on wheels (12) with respect to a wind turbine blade (3') during manufacture such that a frame (10) of the gantry system (8) bridges the blade (3') in a cross-section direction of the blade (3'),
moving (S3) a tool center point (22) of one or more robotic units (9) attached to the frame (10) of the gantry system (8) with respect to the blade (3'), and
performing (S4) a manufacturing step for manufacturing the blade (3') by means of the one or more robotic units (9).
